# EUROPEAN PATENT SPECIFICATION

(11) **EP 1 674 595 B1**
(45) Date of publication and mention of the grant of the patent: **16.02.2011**
(21) Application number: 05257797.0
(22) Date of filing: 19.12.2005
(51) Int. Cl.: C23C 24/04, B23P 6/00

(54) **Structural repair using cold sprayed aluminum material**
Strukturelle Reparatur durch Kaltspritzverfahren von Aluminumwerkstoffen
Reparation structural par pulversation a froid d'aluminium

(30) Priority: 21.12.2004 US 19871
(43) Date of publication of application: 28.06.2006
(73) Proprietor: United Technologies Corporation, Hartford, CT 06101 (US)
(72) Inventor: DeBiccari, Andrew, North Branford, CT 06471 (US); Hayes, Jeffrey D., Suart, FL 33496 (US); Rutz, David A., Glastonbury, CT 06033 (US)
(74) Representative: Leckey, David Herbert

(56) References cited:
- GB-A- 2 394 479
- RU-C1- 2 166 421
- US-A1- 2002 102 360
- US-B1- 6 365 222
- US-B1- 6 602 545
- STEENKISTE VAN T H ET AL: "KINETIC SPRAY COATINGS" SURFACE AND COATINGS TECHNOLOGY, ELSEVIER, AMSTERDAM, NL, vol. 111, no. 1, 10 January 1999 (1999-01-10), pages 62-71, XP009063784 ISSN: 0257-8972

## Description

### BACKGROUND OF THE INVENTION

### (1) Field of the Invention

The present invention relates to a method for repairing components, such as turbine engine parts, using a powdered cold sprayed aluminum containing material.

### (2) Prior Art

Current repair methods allow for dimensional restoration of aluminum and magnesium structures through a variety of techniques such as plasma spray, HVOF, and epoxy bonding. However, these repairs offer no structural benefit when applied to the affected area. Therefore, although the part may be restored dimensionally, these existing repair methods are of no use when the underlying structure violates minimum dimension conditions because the repaired part will not have the required strength. Fusion welding processes, while capable of producing structural repairs, often result in unacceptable distortion. Additionally, fusion welding and similar processes generate high temperatures that may negatively impact the material properties of the substrate material.

Cold spray techniques are disclosed in US 2002/0102360 A1, RU 2166421 C1, GB 2394479 A and US 6602545 B1.

### SUMMARY OF THE INVENTION

Accordingly, it is an object of the present invention to provide a method for repairing components in a way which restores dimensions.

It is a further object of the present invention to provide a method as above which allows for some structural credit to be claimed for the repair without causing unacceptable distortion or negatively impacting the properties of the underlying material.

The foregoing objects are attained by the method of the present invention.

In accordance with the present invention, a method for repairing components is provided as claimed in claim 1.

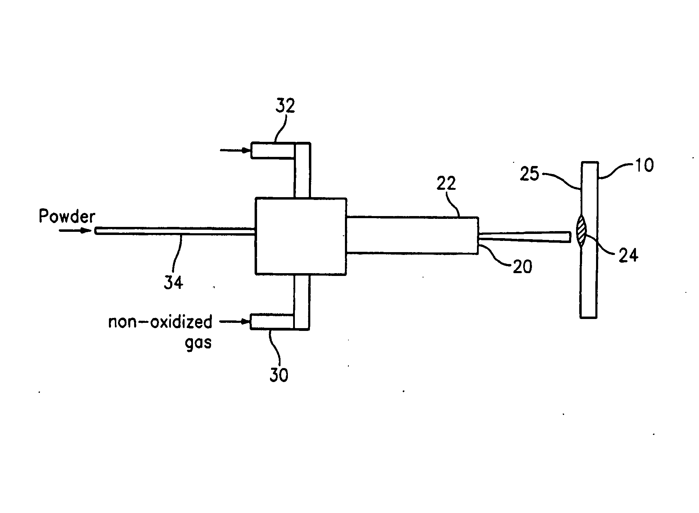

Other details of the structural repair method using cold sprayed aluminum materials in accordance with the present invention, as well as other advantages attendant thereto, are set forth in the following detailed description and the accompanying drawing wherein like reference numerals depict like elements.

### BRIEF DESCRIPTION OF THE DRAWINGS

The Figure illustrates a system for repairing a component using the method of the present invention.

### DETAILED DESCRIPTION OF THE PREFERRED EMBODIMENT(S)

The present invention relates to the repair of components or parts, such as components and parts used in turbine engines, using powdered aluminum containing repair materials.

In the past few years, a technique known as cold gas dynamic spraying ("cold spray") has been developed. This technique is advantageous in that it provides sufficient energy to accelerate particles to high enough velocities such that, upon impact during an initial pass, the particles plastically deform and bond to the surface of the component on which they are being deposited so as to build a relatively dense coating or structural deposit. On subsequent passes, the particles bond to the previously deposited layer. Cold spray does not metallurgically transform the particles from their solid state. The cold spray process has been found to be most useful in effecting repairs of components formed from ductile materials. For example, the cold spray process may be used during the repair of turbine engine components, such as a fan exit inner case or a gearbox, formed from aluminum or magnesium based materials.

When repairing a turbine engine component, corrosion pits and/or damaged areas are mechanically removed through grinding, machining, or other applicable techniques and the resulting surface may or may not be grit blasted prior to depositing a repair material, such as an aluminum containing material, using a cold spray method. Suitable aluminum containing materials which may be used to effect repairs in accordance with the present invention include, but are not limited to, pure aluminum, aluminum alloy 6061, aluminum alloy 2219, Al-12Si alloy, Al-Sc alloy, and aluminum alloy 6061/B4C. In a preferred embodiment of the present invention, the aluminum containing material comprises a material which has a composition that includes more than 50% by weight of aluminum.

Referring now to the Figure, there is shown a system for effecting repairs on an affected area 24 of a component or a part. The system includes a spray gun 22 having a converging/diverging nozzle 20 through which the repair material is sprayed onto an affected area of a surface 25 of the part or component 10 to be repaired. During deposition of the repair material, the part or component 10 may be held stationary or may be articulated or translated by any suitable means (not shown) known in the art. Alternatively, spray nozzle 20 may be held stationary or may be articulated or translated. In some situations, both the part and the nozzle may be manipulated.

In the method of the present invention, the repair material feedstock is a powdered aluminum containing material. The powdered aluminum containing material may be a powdered aluminum containing material of -325 mesh with particle sizes in the range of from 5 microns to 50 microns. Smaller particle sizes such as those mentioned before enable the achievement of higher particle velocities. Below 5 microns in diameter, the particles risk getting swept away from the surface 25 and/or the affected area 24 due to a bow shock layer above the surface 25 and/or the affected area 24. This is due to insufficient mass to propel the particles through the bow shock. The narrower the particle size distribution, the more uniform the particle velocity will be. This is because if one has large and small particles (bi-modal), the small ones will hit the slower, larger ones and effectively reduce the velocity of both.

The fine particles of the aluminum containing repair material may be accelerated to supersonic velocities using compressed gas, such as helium, nitrogen, or other inert gases, and mixtures thereof. Helium is a preferred gas because it produces the highest velocity due to its low molecular weight.

The bonding mechanism employed by the method of the present invention for transforming the powdered aluminum containing repair material into a deposit is strictly solid state, meaning that the particles plastically deform. Any oxide layer that is formed on the particles and/or on the component surface is broken up and fresh metal-to-metal contact is made at very high pressures.

The powdered aluminum containing repair material used to form the deposit may be fed to the spray gun 22 using any suitable means known in the art, such as modified thermal spray feeders. For example, a Praxair powder feeder at a wheel speed of 1 - 5 rpm may be used.

In the process of the present invention, the feeder may be pressurized with a gas selected from the group consisting of helium, nitrogen, or other inert gases, and mixtures thereof. For example, the feeder may be pressurized using helium at a pressure in the range of from 200 psi (1.38 MPa) to 400 psi (2.76 MPa), preferably from 300 psi (2.06 MPa) to 350 psi (2.41 MPa). The main gas is preferably heated so that gas temperatures are in the range of from 250 degrees Centigrade to 550 degrees Centigrade, preferably from 350 degrees Centigrade to 450 degrees Centigrade. The gas may be heated to keep it from rapidly cooling and freezing once it expands past the throat of nozzle 20. The net effect is a surface temperature on the part being repaired of about 115 degrees Fahrenheit (46°C) during deposition. Any suitable means known in the art may be used to heat the gas.

To deposit the aluminum containing repair material, the nozzle 20 may pass over the affected area 24 of the part 10 being repaired more than once. The number of passes required is a function of the thickness of the repair material to be applied. The method of the present invention is capable of forming a deposit having any desired thickness. If one wants to form a thick layer, the spray gun 22 may be held stationary to form a thick deposit over the affected area 24. When building a deposit layer of the aluminum containing repair material, it is desirable to limit the thickness per pass in order to avoid a quick build up of residual stresses and unwanted debonding between deposit layers.

The main gas that is used to deposit the particles of the repair material over the affected area 24 may be passed through the nozzle 20 via an inlet 30 at a flow rate of from 0.001 SCFM to 50 SCFM (28.3 cm³/min to 1.42 m³/min), preferably in the range of from 15 SCFM to 35 SCFM (0.42 to 0.99 m³/min). The foregoing flow rates are preferred when helium is used as the main gas.

The pressure of the spray gun 22 may be in the range of from 200 psi (1.38 MPa) to 400 psi (2.76 MPa), preferably from 300 psi (206 MPa) to 350 psi (2.41 MPa). The powdered aluminum containing repair material is preferably fed from a hopper, which is under a pressure in the range of from 10 psi (69 kPa) to 50 psi (345 kPa) higher than the specific main gas pressure, preferably 15 psi (103 kPa) higher to the spray gun 22 via line 34 at a feed rate in the range of from 10 grams/min to 100 grams/min, preferably from 15 grams/min to 50 grams/min.

The powdered aluminum containing repair material is preferably fed to the spray gun 22 using a non-oxidizing carrier gas. The carrier gas may be introduced via inlet 30 at a flow rate of from 0.001 SCFM (28.3 cm³/min) to 50 SCFM (1.42 m³/min) , preferably from 8 SCFM (0.23 m³/min) to 15 SCFM (0.42 m³/min). The foregoing flow rate is useful if helium is used as the carrier gas.

The spray nozzle 20 is held at a distance from the affected area 24. This distance is known as the spray distance. Preferably, the spray distance is in the range of from 10 mm. to 50 mm.

The velocity of the powdered repair material particles leaving the spray nozzle 20 may be in the range of from 825 m/s to 1400 m/s. preferably from 850 m/s to 1200 m/s.

The deposit thickness per pass may be in the range of from 0.001 inches (0.025 mm) to 0.030 inches (0.76 mm).

Using the method of the present invention, the aluminum containing repair material, such as aluminum alloy 6061, is sprayed over the affected area on the part or component 10 to a thickness above the original wall thickness. After the aluminum containing material has been deposited, the part or component 10 may be heat treated to recover the ductility of the cold sprayed aluminum containing repair material. The heat treatment may be carried out at a temperature which achieves the desired ductility for the part or component 10. For example, the heat treatment may be one in which the part or component with the cold sprayed aluminum containing material deposit is heated in an air oven to a temperature of 500 degrees Fahrenheit (260°C) for a time period of 1 hour to 2 hours. When some aluminum containing repair materials are used, no heat treatment may be needed. When other aluminum containing repair materials are used, the heat treatment may be at a temperature which varies from 100 degrees Fahrenheit (38°C) to a temperature greater than 500 degrees Fahrenheit (260°C) for a time period in the range of 1 hour to 24 hours. When a heat treatment is required, it may be applied globally to the entire component or locally in the area of the repair.

After any heat treatment has been completed, the part or component 10 with the deposited repair material may be mechanically smoothed in the region of the affected area 24 and structural credit may be claimed for the repaired area. Structural credit as used herein refers to the fact that the cold sprayed aluminum alloy repair material has a percentage of the base material strength and repaired thickness is considered as part of the measured wall thickness. It is not necessary that the deposits of the cold sprayed aluminum containing repair material have parent metal strength, only that the structural credit be sufficient such that the effective wall thickness is above the required minimum. If the effective wall thickness is above the required minimum, the part or component 10 can be salvaged. As used herein, the term effective wall thickness means that if one considers the sprayed deposit to have 75% of the strength of the base material forming the part or component 10, then the repair thickness is credited 75%. Thus, if the current wall thickness of the part or component 10 is 0.100 inches (2.54 mm) and a deposit of 0.050 inches (1.27 mm) is applied to make total thickness of 0.150 inches (3.81 mm), the effective wall thickness of the repair is 0.1375 inches (3.49 mm) since the repair material has 75% of the strength of the base material of the part or component.

Cold spray offers many advantages over other metallization processes. Since the aluminum containing powders used for the repair material are not heated to high temperatures, no oxidation, decomposition, or other degradation of the feedstock material occurs. Powder oxidation during deposition is also controlled since the particles are contained within the oxygen-free accelerating gas stream. Cold spray also retains the microstructure of the feedstock. Still further, because the feedstock is not melted, cold spray offers the ability to deposit materials that cannot be sprayed conventionally due to the formation of brittle intermetallics or a propensity to crack upon cooling or during subsequent heat treatments.

Cold spray, because it is a solid state process, does not heat up the part appreciably. As a result, any resulting distortion is minimized. Controlling part temperature also allows certain base material properties, obtained through prior heat treatments, to be retained. Cold spray induces compressive surface residual stresses, which can increase resistance to fatigue and brittle failures, resulting in more robust repairs.

While the present invention has been described in the context of using a cold spray process, other processes can be used to effect the repairs. These processes provide sufficient energy to accelerate particles to a high enough velocity such that, upon impact, they plastically deform and bond to the surface and build a relatively dense coating or structural deposit. These processes also do not metallurgically transform the particles from their solid state. These processes include, but are not limited to, kinetic metallization, electromagnetic particle acceleration, modified high velocity air fuel spraying, and high velocity impact fusion. They only fall under the present invention, if they include spraying.

As-deposited bond strengths in excess of 10 ksi have been achieved for spraying 6061 aluminum alloy onto 6061 aluminum alloy substrates. Specimens were prepared using helium carrier gas at 300 psi (2.07 MPa) heated to 400 degrees Centigrade. The nozzle was traversed over the test specimen at 125 mm per second, and the powder feed rate was such that approximately a 0.010 inch layer of material was deposited each pass. A total of six passes were made over the specimen, resulting in a final deposited thickness of 0.060 - 0.070 inches (1.52-1.78 mm).

## Claims

1. A method for repairing components (10) comprises the steps of:
providing a component (10) having a defect to be repaired, and
spraying a metallic repair material consisting of an aluminum containing repair material including more than 50% wt aluminum over an affected area (24) on a surface (25) of said component (10) so that said repair material plastically deforms without melting and bonds to said affected area (24) upon impact with said affected area (24) and thereby covers said affected area (24):
said component having an original thickness and said aluminum containing repair material is sprayed over said affected area (24) so that a thickness of the repaired component over said affected area (24) is above said **characterised in that** it is stronged original thickness and so that an effective wall thickness of the repaired component over said affected area (24) is above a required minimum, wherein said effective wall thickness is determined by:
determining the strength of the repair material as a percentage of the strength of the component material;
determining a credited thickness of the sprayed repair material from the actual thickness of the sprayed repair material using said percentage; and
summing a thickness of the component (10) in the affected area (24) and the credited thickness of the sprayed repair material.

2. A method according to claim 1, wherein said Spraying step comprises spraying a material selected from the group consisting of pure aluminum and an aluminum containing alloy onto said affected area (24).

3. A method according to claim 1, wherein said spraying step comprises spraying an aluminum alloy repair material.

4. A method according to claim 1, 2 or 3 wherein said spraying step comprises providing said aluminum containing repair material in powder form having a particle size in the range of from 5 microns to 50 microns and accelerating said powder particles to a speed in the range of from 825 m/s to 1400 m/s.

5. The method according to claim 4, wherein said accelerating step comprises accelerating said powder particles to a speed in the range of from 850 m/s to 1200 m/s.

6. The method according to claim 4 or 5, further comprising feeding said aluminum containing powder to a spray nozzle (20) using nitrogen as a carrier gas.

7. The method according to claim 4 or 5, further comprising feeding said aluminum containing powder to a spray nozzle (20) at a feed rate of from 10 grams/min to 100 grams/min at a pressure in the range from 200 psi (1.38 MPa) to 400 psi (2.76 MPa) using a carrier gas.

8. The method according to claim 6 or 7, wherein said feeding step comprises feeding said aluminum containing powder to said spray nozzle (20) at a feed rate from 15 grams/min to 50 grams/min.

9. The method according to claim 7, wherein said carrier gas comprises helium and said feeding step comprises feeding said helium to said nozzle (20) at a flow rate of from 0.001 SCFM (28.3 cm³/min) to 50 SCFM (1.42 m³/min).

10. The method according to claim 9, wherein said feeding step comprises feeding said helium to said nozzle (20) at a flow rate of from 8 to 15 SCFM (0.23 to 0.42 m³/win).

11. The method according to any of claims 6 to 10, wherein said spraying step further comprises passing said aluminum containing powder particles through said nozzle (20) using a main gas at a temperature in the range of from 250 degrees Centigrade to 550 degrees Centigrade.

12. The method according to claim 11, wherein said passing step comprises passing said aluminum containing powder particles through said nozzle (20) at a main gas temperature in the range of 350 degrees Centigrade to 450 degrees Centigrade.

13. The method according to claim 11 or 12, wherein said main gas comprises helium and said passing step comprises feeding said helium to said nozzle at a rate in the range of from 0.001 SCFM (28.3 cm³/min) to 50 SCFM (1.42 m³/min).

14. The method according to claim 13, wherein said helium feeding step comprises feeding said helium at a rate of from 15 to 35 SCFM (0.42 to 0.99 m³/min).

15. The method according to any of claims 6 to 14, further comprising maintaining said nozzle (20) at a distance from 10 mm to 50 mm from said affected area (24).

16. The method according to any preceding claim, further comprising mechanically removing at least one of corrosion pits and damaged areas from said affected area (24) on said component (10) prior to said spraying step and grit blasting said affected area (24) of said component (10) prior to said spraying step.

17. The method according to any preceding claim, further comprising heat treating said component (10) with said sprayed aluminum containing repair material at a temperature and for a time sufficient to recover ductility for said sprayed aluminum containing repair material.

## Patentansprüche

1. Ein Verfahren zum Reparieren von Bauteilen (10) weist folgende Schritte auf:
Bereitstellen eines Bauteils (10) mit einem zu reparierenden Defekt; und
Spritzen eines metallischen Reparaturmaterials, bestehend aus einem Aluminium enthaltenden Reparaturmaterial, das mehr als 50 Gew.% Aluminium enthält, über einen angegriffenen Bereich (24) an einer Oberfläche (25) des Bauteils (10), so dass sich das Reparaturmaterial beim Auftreffen plastisch verformt ohne zu schmelzen, und sich mit dem angegriffenen Bereich (24) verbindet und dadurch den angegriffenen Bereich (24) bedeckt;
wobei das Bauteil eine Ausgangsdicke hat, und wobei das Aluminium enthaltende Reparaturmaterial so über den angegriffenen Bereich (24) gespritzt wird, dass eine Dicke des reparierten Bauteils über dem angegriffenen Bereich (24) über der Ausgangsdicke ist, und **dadurch gekennzeichnet, dass** es so gespritzt wird, dass eine effektive Wanddicke des reparierten Bauteils über dem angegriffenen Bereich (24) über einem erforderlichen Minimum ist, wobei die effektive Wanddicke bestimmt wird durch:
Bestimmen der Festigkeit des Reparaturmaterials als ein Prozentsatz der Festigkeit des Bauteilmaterials;
Bestimmen einer zugeschriebenen Dicke des gespritzten Reparaturmaterials aus der tatsächlichen Dicke des gespritzten Reparaturmaterials unter Verwendung des Prozentsatzes; und
Aufsummieren einer Dicke des Bauteils (10) in dem angegriffenen Bereich (24) und der zugeschriebenen Dicke des gespritzten Reparaturmaterials.

2. Verfahren nach Anspruch 1, bei dem der Schritt des Spritzens ein Spritzen eines Materials, das ausgewählt wird aus der Gruppe, die aus reinem Aluminium und einer Aluminium enthaltenden Legierung besteht, auf den angegriffenen Bereich (24) aufweist.

3. Verfahren nach Anspruch 1, bei dem der Schritt des Spritzens ein Spritzen eines Reparaturmaterials aus Aluminiumlegierung aufweist.

4. Verfahren nach Anspruch 1, 2 oder 3, bei dem der Schritt des Spritzens ein Bereitstellen des Aluminium enthaltenden Reparaturmaterials in Pulverform mit einer Partikelgröße in dem Bereich von 5 µm bis 50 µm und ein Beschleunigen der Pulverpartikel auf eine Geschwindigkeit in dem Bereich von 825 m/s bis 1400 m/s aufweist.

5. Verfahren nach Anspruch 4, bei dem der Beschleunigungsschritt ein Beschleunigen der Pulverpartikel auf eine Geschwindigkeit in dem Bereich von 850 m/s bis 1200 m/s aufweist.

6. Verfahren nach Anspruch 4 oder 5, außerdem aufweisend ein Zuführen des Aluminium enthaltenden Pulvers zu einer Spritzdüse (20) unter Verwendung von Stickstoff als ein Trägergas.

7. Verfahren nach Anspruch 4 oder 5, außerdem aufweisend ein Zuführen des Aluminium enthaltenden Pulvers zu einer Spritzdüse (20) mit einer Zuführgeschwindigkeit von 10 g/min bis 100 g/min bei einem Druck in dem Bereich von 200 psi (1,38 MPa) bis 400 psi (2,76 MPa) unter Verwendung eines Trägergases.

8. Verfahren nach Anspruch 6 oder 7, bei dem der Zuführschritt ein Zuführen des Aluminium enthaltenden Pulvers zu der Spritzdüse (20) mit einer Zuführgeschwindigkeit von 15 g/min bis 50 g/min aufweist.

9. Verfahren nach Anspruch 7, bei dem das Trägergas Helium aufweist, und der Zuführschritt ein Zuführen des Heliums zu der Düse (20) mit einer Strömungsgeschwindigkeit von 0,001 SCFM (28,3 cm³/min) bis 50 SCFM (1,42 m³/min) aufweist.

10. Verfahren nach Anspruch 9, bei dem der Zuführschritt ein Zuführen des Heliums zu der Düse (20) mit einer Strömungsgeschwindigkeit von 8 bis 15 SCFM (0,23 bis 0,42 m³/min) aufweist.

11. Verfahren nach einem der Ansprüche 6 bis 10, bei dem der Schritt des Spritzens außerdem ein Hindurchführen der Aluminium enthaltenden Pulverpartikel durch die Düse (20) unter Verwendung eines Hauptgases bei einer Temperatur in dem Bereich von 250 °C bis 550 °C aufweist.

12. Verfahren nach Anspruch 11, bei dem der Schritt des Hindurchführens ein Hindurchführen der Aluminium enthaltenden Pulverpartikel durch die Düse (20) bei einer Hauptgastemperatur in dem Bereich von 350 °C bis 450 °C aufweist.

13. Verfahren nach Anspruch 11 oder 12, bei dem das Hauptgas Helium aufweist, und der Schritt des Hindurchführens ein Zuführen des Heliums zu der Düse mit einer Geschwindigkeit in dem Bereich von 0,001 SCFM (28,3 cm³/min) bis 50 SCFM (1,42 m³/min) aufweist.

14. Verfahren nach Anspruch 13, bei dem der Helium-Zuführschritt ein Zuführen des Heliums mit einer Geschwindigkeit von 15 bis 35 SCFM (0,42 bis 0,99 m³/min) aufweist.

15. Verfahren nach einem der Ansprüche 6 bis 14, außerdem aufweisend ein Halten der Düse (20) in einem Abstand von 10 mm bis 50 mm von dem angegriffenen Bereich (24).

16. Verfahren nach einem vorangehenden Anspruch, außerdem aufweisend ein mechanisch Entfernen von Korrosionsgrübchen und/oder beschädigten Bereichen von dem angegriffenen Bereich (24) an dem Bauteil (10) vor dem Schritt des Spritzens, und ein Abstrahlen des angegriffenen Bereichs (24) des Bauteils (10) vor dem Schritt des Spritzens.

17. Verfahren nach einem vorangehenden Anspruch, außerdem aufweisend ein Wärmebehandeln des Bauteils (10) mit dem aufgespritzten, Aluminium enthaltenden Reparaturmaterial bei einer Temperatur und für eine Zeit, die ausreichend sind, um für das aufgespritzte, Aluminium enthaltende Reparaturmaterial die Duktilität wieder zu erlangen.

## Revendications

1. Procédé de réparation de composants (10), comprenant les étapes suivantes:
disposer un composant (10) qui présente un défaut à réparer; et
pulvériser une matière de réparation métallique, qui est constituée d'une matière de réparation contenant de l'aluminium qui contient au moins 50 % en poids d'aluminium, sur une région abîmée (24) sur une surface (25) dudit composant (10), de telle sorte que ladite matière de réparation subisse une déformation plastique sans fondre et se colle à ladite région abîmée (24) lors de l'impact avec ladite région abîmée (24), et recouvre ainsi ladite région abîmée (24);
ledit composant présentant une épaisseur originale, et ladite matière de réparation contenant de l'aluminium est pulvérisée sur ladite région abîmée (24) de telle sorte qu'une épaisseur du composant réparé sur ladite région abîmée (24) soit supérieure à l'épaisseur originale, et **caractérisé en ce qu'**elle est pulvérisée de telle sorte qu'une épaisseur de paroi effective du composant réparé sur ladite région abîmée (24) soit supérieure à un minimum requis, dans lequel ladite épaisseur de paroi effective est déterminée en exécutant les étapes suivantes:
déterminer la résistance de la matière de réparation sous la forme d'un pourcentage de la résistance de la matière qui constitue le composant;
déterminer une épaisseur attribuée de la matière de réparation pulvérisée à partir de l'épaisseur réelle de la matière de réparation pulvérisée en utilisant ledit pourcentage; et
additionner une épaisseur du composant (10) dans la région abîmée (24) et l'épaisseur attribuée de la matière de réparation pulvérisée.

2. Procédé selon la revendication 1, dans lequel ladite étape de pulvérisation comprend la pulvérisation d'une matière sélectionnée dans le groupe comprenant l'aluminium pur et un alliage contenant de l'aluminium sur ladite région abîmée (24).

3. Procédé selon la revendication 1, dans lequel ladite étape de pulvérisation comprend la pulvérisation d'une matière de réparation en alliage d'aluminium.

4. Procédé selon l'une quelconque des revendications 1, 2 ou 3, dans lequel ladite étape de pulvérisation comprend la fourniture d'une matière de réparation contenant de l'aluminium sous la forme d'une poudre qui présente une taille de particule qui est comprise dans la gamme de 5 microns à 50 microns, et l'accélération desdites particules de poudre jusqu'à atteindre une vitesse qui est comprise dans la gamme de 825 m/s à 1400 m/s.

5. Procédé selon la revendication 4, dans lequel ladite étape d'accélération comprend l'accélération desdites particules en poudre jusqu'à atteindre une vitesse qui est comprise dans la gamme de 850 m/s à 1200 m/s.

6. Procédé selon la revendication 4 ou 5, comprenant en outre la fourniture de ladite poudre contenant de l'aluminium à une buse de pulvérisation (20) en utilisant de l'azote comme gaz porteur.

7. Procédé selon la revendication 4 ou 5, comprenant en outre la fourniture de ladite poudre contenant de l'aluminium à une buse de pulvérisation (20) à un débit qui est compris entre 10 grammes/minute et 100 grammes/minute et à une pression qui est comprise dans la gamme de 200 psi (1,38 MPa) à 400 psi (2,76 MPa) en utilisant un gaz porteur.

8. Procédé selon la revendication 6 ou 7, dans lequel ladite étape de fourniture comprend la fourniture de ladite poudre contenant de l'aluminium à ladite buse de pulvérisation (20) à un débit qui est compris entre 15 grammes/minute et 50 grammes/minute.

9. Procédé selon la revendication 7, dans lequel ledit gaz porteur contient de l'hélium, et ladite étape de fourniture comprend la fourniture dudit hélium à ladite buse (20) à un débit qui est compris entre 0,001 SCFM (28,3 cm³/minute) et 50 SCFM (1,42 m³/minute).

10. Procédé selon la revendication 9, dans lequel ladite étape de fourniture comprend la fourniture dudit hélium à ladite buse (20) à un débit qui est compris entre 8 et 15 SCFM (0,23 à 0,42 m³/minute).

11. Procédé selon l'une quelconque des revendications 6 à 10, dans lequel ladite étape de pulvérisation comprend en outre le passage de ladite poudre contenant de l'aluminium à travers ladite buse (20) en utilisant un gaz principal à une température qui est comprise dans la gamme de 250 degrés centigrades à 550 degrés centigrades.

12. Procédé selon la revendication 11, dans lequel ladite étape de passage comprend le passage desdites particules de poudre contenant de l'aluminium à travers ladite buse (20) à une température de gaz principale qui est comprise dans la gamme de 350 degrés centigrades à 450 degrés centigrades.

13. Procédé selon la revendication 11 ou 12, dans lequel ledit gaz principal contient de l'hélium, et ladite étape de passage comprend la fourniture dudit hélium à ladite buse à un débit qui est compris entre 0,001 SCFM (28,3 cm³/minute) et 50 SCFM (1,42 m³/minute).

14. Procédé selon la revendication 13, dans lequel ladite étape de fourniture d'hélium comprend la fourniture dudit hélium à un débit qui est compris entre 15 et 35 SCFM (0,42 et 0,99 m³/minute).

15. Procédé selon l'une quelconque des revendications 6 à 14, comprenant en outre le maintien de ladite buse (20) à une distance de 10 mm à 50 mm de ladite région abîmée (24).

16. Procédé selon l'une quelconque des revendications précédentes, comprenant en outre l'enlèvement mécanique d'au moins une des piqûres de corrosion et des zones endommagées de ladite région abîmée (24) sur ledit composant (10) avant ladite étape de pulvérisation, et le grenaillage de ladite région abîmée (24) dudit composant (10) avant ladite étape de pulvérisation.

17. Procédé selon l'une quelconque des revendications précédentes, comprenant en outre le traitement thermique dudit composant (10) avec ladite matière de réparation contenant de l'aluminium pulvérisée à une température et pendant une période de temps suffisantes pour récupérer la ductilité de ladite matière de réparation contenant de l'aluminium pulvérisée.
